Europäisches Patentamt

(19) European Patent Office

Office européen des brevets

(11) Numéro de publication: **0 263 004**
**B1**

(12) **FASCICULE DE BREVET EUROPEEN**

(45) Date de publication du fascicule du brevet:
**07.02.90**

(21) Numéro de dépôt: **87401978.9**

(22) Date de dépôt: **03.09.87**

(51) Int. Cl.⁴: **F16C 29/00, F16C 29/06**

(54) **Système de guidage linéaire à organes de roulement et dispositif de réglage pour un tel système.**

(30) Priorité: **23.09.86 FR 8613257**

(43) Date de publication de la demande:
**06.04.88 Bulletin 88/14**

(45) Mention de la délivrance du brevet:
**07.02.90 Bulletin 90/6**

(84) Etats contractants désignés:
**AT BE CH DE ES GB GR IT LI LU NL SE**

(56) Documents cités:
**FR-A- 1 261 540**
**FR-A- 1 522 484**
**FR-A- 2 570 777**

(73) Titulaire: **MICRO-CONTROLE, Société Anonyme dite:,**
**Z.I. de St. Guénault, F-91005 Evry(FR)**

(72) Inventeur: **Tessier, Marie Claude, 2 rue de Bourgogne**
**Echilleuses, F-45390 Puiseaux(FR)**
Inventeur: **Gaillard, Georges, 8 rue Boissin**
**Boiscommun, F-45340 Beaune La Rolande(FR)**

(74) Mandataire: **Bonnetat, Christian et al, CABINET**
**BONNETAT 23, Rue de Léningrad, F-75008 Paris(FR)**

**Description**

La présente invention concerne un système de guidage linéaire à organes de roulement, du type comportant un élément central et un élément périphérique, liés l'un à l'autre par au moins une paire d'ensembles d'organes de roulement qui sont portés par ledit élément périphérique et qui sont disposés l'un en regard de l'autre, de part et d'autre dudit élément central.

Dans un tel système de guidage, ledit élément central peut être un rail de guidage, ledit élément périphérique étant alors un chariot susceptible de glisser le long dudit rail. En variante, ledit élément périphérique peut être une base et le dit élément central peut être une platine susceptible de se déplacer en translation linéaire par rapport à la dite base.

Pour que le guidage obtenu par un tel système soit précis, il est nécessaire que lesdits organes de roulement de deux ensembles opposés soient en appui contre des pistes de roulement prévues sur ledit élément central. Toutefois, la pression exercée par lesdits organes de roulement sur ledit élément central ne doit pas engendrer un frottement élevé. Ainsi, cette pression doit, à la fois, être suffisamment élevée pour que la précision de guidage soit bonne, mais suffisamment faible pour que le frottement ne soit pas trop élevé.

Dans les systèmes de guidage de ce type connus, par exemple le type de FR-A 2 570 777, ledit élément périphérique présente une section au moins approximativement en forme de U ou de C et chacun desdits ensembles d'organes de roulement est disposé au voisinage d'une des ailes de cet élément, parallèles à la direction de déplacement relatif desdits éléments central et périphérique. Par suite, il est possible de prévoir, pour au moins l'un desdits ensembles d'organes de roulement, au moins un dispositif de réglage de pression, tel qu'une vis, prenant appui sur l'une desdites ailes pour presser l'ensemble d'organes de roulement correspondant en direction dudit élément central. Ainsi, par action sur la ou les vis de pression, il est possible de faire varier la pression (souvent appelée "précontrainte") exercée par les organes de roulement des deux ensembles d'une paire sur ledit élément central. Toutefois, une telle réalisation présente des inconvénients :

1. Tout d'abord, elle oblige à réaliser ledit élément périphérique avec une forme à section en U ou en C, ce qui peut ne pas être avantageux, notamment lorsque cet élément périphérique est la base d'une platine mobile (élément central). En effet, dans ce cas, il peut être préférable que ladite base soit formée par une simple plaque.

2. Ensuite, il est impossible d'ajuster la précontrainte à la valeur théoriquement désirée. L'action sur les vis de pression permet d'augmenter ou de diminuer cette précontrainte, mais ne permet de lui communiquer une valeur déterminée. Le réglage de précontrainte est donc laissé au savoir-faire et à la compétence de l'opérateur. Il peut en résulter des imprécisions de guidage, ou bien des usures prématurées desdits systèmes de guidage et des puissances d'entraînement excédentaires. De plus, lorsque le système de guidage comporte plusieurs éléments périphériques liés entre eux et associés au même élément central, il peut être préjudiciable que les précontraintes des différents éléments périphériques ne soient pas réglées à la même valeur.

La présente invention a pour but de pallier ces inconvénients. A cet effet, le système de guidage linéaire à organes de roulement, du type comportant un élément central et un élément périphérique liés l'un à l'autre par au moins une paire d'ensembles d'organes de roulement associés à des patins fixés sur ledit élément périphérique au moyen de vis, et disposés l'un en regard de l'autre de part et d'autre dudit élément central, ainsi qu'un dispositif permettant de régler la pression exercée par lesdits organes de roulement sur ledit élément central lorsque lesdites vis de fixation sont desserrées, est remarquable, selon l'invention, en ce que ledit dispositif de réglage de la pression est extérieur audit système de guidage et solidarisable de façon temporaire desdits patins, et comporte des moyens de mesure de la pression exercée par lesdits organes de roulement sur ledit élément central.

Ainsi, selon l'invention, la précontrainte ou la pression exercée par les organes de roulement sur ledit élément central est réglée à la valeur théorique souhaitée, correspondants à l'optimisation du compromis précision de guidage - frottement, grâce à l'adjonction temporaire du dispositif de réglage directement dans lesdits patins. De plus, on évite, ainsi, l'obligation d'avoir un élément périphérique en forme de U.

Dans un mode préféré de réalisation, ledit dispositif de réglage peut être constitué par au moins deux colonnes sensiblement parallèles, disposées de part et d'autre dudit élément central sensiblement dans un plan perpendiculaire à la direction de guidage linéaire, et susceptibles de venir respectivement en prise avec lesdits patins, et par des moyens de réglage susceptibles de faire varier l'écartement desdites colonnes, lesdits moyens de mesure étant associés auxdits moyens de réglage, et permettant de déterminer la force exercée par lesdites colonnes sur ledit élément central par l'intermédiaire des patins.

Dans un mode particulier de réalisation, lesdits moyens de réglage sont constitués par un mécanisme vis-écrou comprenant une tige filetée, s'engageant dans des trous de passage ménagés respectivement dans lesdites colonnes, en venant en butée par une extrémité contre l'une d'elles, ladite tige filetée débouchant de l'autre colonne et recevant un écrou de réglage. Avantageusement, lesdits moyens de mesure sont constitués par un dynamomètre du type à ressort disposé entre l'edit écrou de réglage et ladite colonne située en regard dudit écrou, celle-ci étant équipée d'un indicateur gradué avec lequel coopère ledit écrou de réglage. Ainsi, la position de l'écrou de réglage par rapport à l'indicateur gradué correspond, en fonction du tarage du ressort, à une force déterminée excercée par lesdites colonnes sur l'élément central par l'intermédiaire des patins.

Selon une autre caractéristique de l'invention, dans chaque patin portant un ensemble d'organes de roulement est prévu un perçage dans lequel est susceptible de venir s'insérer l'extrémité d'une colonne.

L'invention concerne, quoique non exclusivement, les systèmes de guidage dans lesquels les patins sont du type à circulation de billes, et plus particulièrement les patins disposés de part et d'autre dudit élément central portant, chacun, deux ensembles d'organes de roulement superposés, ledit élément central étant ainsi guidé par deux paires d'ensembles d'organes de roulement.

Dans une forme préférée de réalisation, les parties desdites colonnes susceptibles d'être insérées dans lesdits perçages des patins présentent une saillie d'appui latéral convexe.

Avantageusement, les points de contact entre ladite saillie convexe et la paroi du perçage correspondant de chaque patin sont situés dans un plan médian et parallèle aux plans formés par les paires d'ensembles d'organes de roulement. Ainsi, l'action des efforts exercés par chaque colonne sur les ensembles d'organes de roulement de chacun des patins en appui sur les pistes de roulement de l'élément central est symétrique et d'intensité égale.

La présente invention concerne également le dispositif de réglage destiné à un système de guidage linéaire à organes de roulement comportant un élément central et un élément périphérique liés l'un à l'autre par au moins une paire d'ensembles d'organes de roulement associés à des patins fixés sur ledit élément périphérique au moyen de vis, et disposés l'un en regard de l'autre de part et d'autre dudit élément central, ledit dispositif de réglage permettant de régler la pression exercée par lesdits organes de roulement sur ledit élément central lorsque lesdites vis de fixation desdits patins sont desserrées.

Le dispositif est remarquable en ce qu'il est susceptible d'être solidarisé de façon temporaire audit système et en ce qu'il comporte des moyens de mesure de la pression exercée par lesdits organes de roulement sur ledit élément central.

Selon un mode préféré de réalisation, il est constitué par au moins deux colonnes sensiblement parallèles susceptibles de venir respectivement en prise avec lesdits patins, et par des moyens de réglage susceptibles de faire varier l'écartement desdites colonnes, lesdits moyens de mesure étant associés auxdits moyens de réglage, et permettent de déterminer la force exercée par lesdites colonnes sur ledit élément central par l'intermédiaire des patins. Lesdits moyens de réglage peuvent être avantageusement constitués par un mécanisme vis-écrou comprenant une tige filetée, susceptible de s'engager dans des trous de passage ménagés respectivement dans lesdites colonnes, en venant en butée par une extrémité contre l'une d'elles, ladite tige filetée débouchant de l'autre colonne et recevant un écrou de réglage.

Dans une forme préférée de réalisation, lesdits moyens de mesure peuvent être constitués par un dynamomètre du type à ressort disposé entre ledit écrou de réglage et la dite colonne située en regard du dit écrou celle-ci étant équipée d'un indicateur gradué avec lequel coopère ledit écrou de réglage.

Les figures du dessin annexé feront bien comprendre comment l'invention peut être réalisée. Des références identiques désignent des éléments semblables.

La figure 1 représente, en coupe, un exemple particulier de réalisation d'un système de guidage linéaire à organes de roulement, perfectionné, selon l'invention.

La figure 2 est une vue de coté, selon la flèche F de la figure 1, d'une des colonnes constituant le dispositif de réglage.

La figure 3 est une vue à une échelle agrandie du détail A de la figure 1.

La figure 4 représente une vue de dessus du système de guidage montré en regard de la figure 1.

La figure 5 est une vue en coupe du système de guidage selon la ligne V-V de la figure 4.

Le système de guidage linéaire à organes de roulement, montré sur ces figures, comporte un élément central, tel qu'une platine 1 susceptible d'être déplacée dans un élément périphérique, tel qu'une base 2, par l'intermédiaire d'ensembles 3 et 4 d'organes de roulement associés respectivement à des patins 5 et 6 fixés à la base 2, et disposés l'un en regard de l'autre de part et d'autre de la platine 1.

Dans une variante de réalisation non représentée, ledit élément central aurait pu être un rail de guidage, et ledit élément périphérique, un chariot susceptible de coulisser le long du rail, sans sortir pour cela du cadre de l'invention.

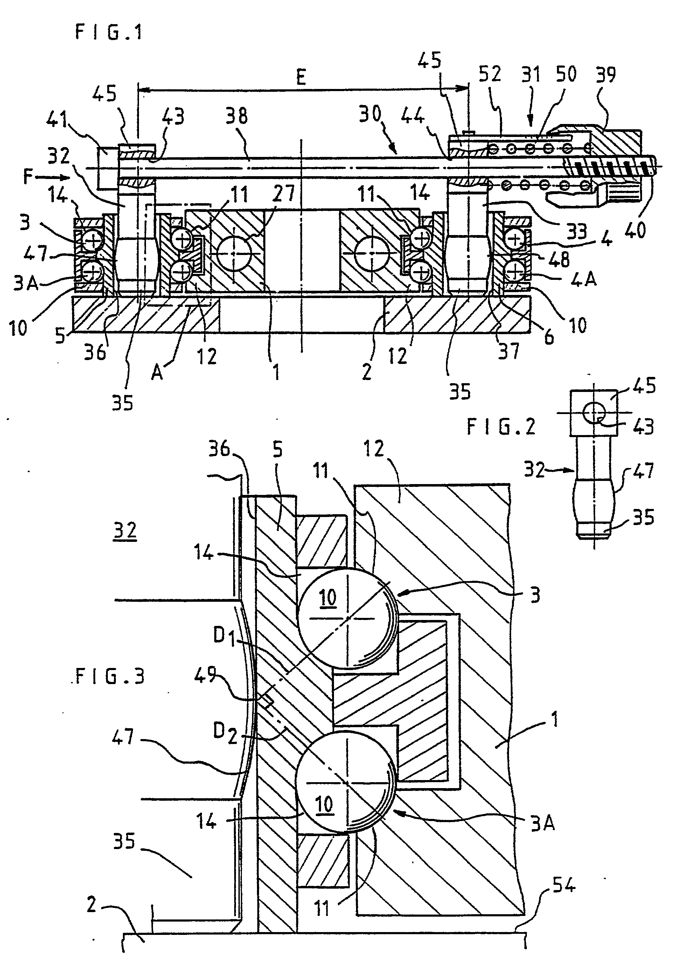

Dans l'exemple décrit en regard des figures 1 à 5, la platine 1 peut porter solidairement un instrument de précision dont le déplacement doit être aussi fin et précis que possible, tandis que la base 2 peut être fixée à un socle rigide.

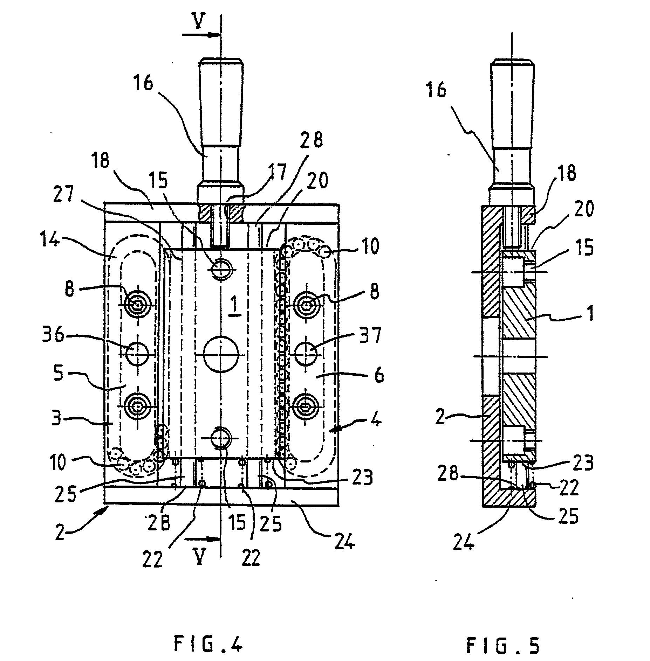

Chaque patin 5 et 6, disposé de part et d'autre de la platine 1, est fixé à la base 2 par des vis 8 visibles en regard de la figure 4, et comporte avantageusement deux ensembles d'organes de roulement d'une part 3 et 3A, et d'autre part 4 et 4A superposés l'un par rapport à l'autre.

Ainsi, la platine 1 est guidée par deux paires d'ensembles d'organes de roulement, une première paire formée par les ensembles 3 et 4 contenus dans un même plan horizontal, et, une seconde paire formée par les ensembles 3A et 4A contenus dans un autre plan horizontal, parallèle au précédent.

Les organes de roulement, tels que des billes 10, coopèrent avec des pistes de roulement 11 ménagées dans les bords correspondants 12 de la platine 1, et circulent dans des chemins de roulements 14 agencés dans les patins 5 et 6. La réalisation de ces chemins est de type connu et ne sera donc pas davantage décrit. Les billes 10 sont emprisonnées dans ces chemins, et libres en rotation sur elles-mêmes.

En regard des figures 4 et 5, des trous de fixation 15 sont prévus dans la platine 1 afin de pouvoir solidariser, par exemple, un instrument de précision non illustré. Ces trous 15 sont percés perpendiculairement aux plans desdites paires d'ensembles d'organes de roulement, et donc à la direction de guidage de la platine.

Pour assurer le déplacement de la platine 1 par rapport à la base 2, une vis micrométrique 16 est montée dans un trou taraudé 17 pratiqué dans l'un, 18, des rebords transversaux de la base 2. La vis 16, manipulée par un opérateur, permet d'agir sur l'une, 2C, des faces latérales de la platine 1, ce qui provoque son déplacement, et le guidage de celle-ci sur les organes de roulement.

La platine se déplace à l'encontre de deux ressorts 22 disposés entre la face latérale opposée à la précédente, 20, et l'autre rebord transversal 24 de la base 2. Chaque ressort 22 est porté par un guide 25 traversant la platine 1 par ses faces latérales 20 et 23 grâce à un orifice 27 prévu dans celle-ci. Les extrémités 28 de chaque guide 25 sont montées dans les rebords transversaux 18 et 24 de la base 2.

La platine 1 peut ainsi occuper n'importe quelle position comprise entre d'une part, une première position extrême correspondant à celle où la face latérale 20 de la platine est en butée contre le rebord transversal 18, et, d'autre part, une seconde position extrême correspondant à celle où la face latérale 23 de la platine comprime les ressorts 22 de façon que leurs spires soient jointives, contre le rebord transversal 24.

La qualité d'un tel système de guidage réside notamment dans la précision du guidage de la platine par rapport à la base. En conséquence, il est nécessaire que la précontrainte ou la pression exercée par les organes de roulement sur les pistes de roulement de la platine puisse être réglée avec précision pour les raisons évoquées préalablement et obtenir l'optimisation du compromis précision de guidage - frottement. Pour cela, le système de guidage comporte un dispositif 30 permettant de régler la précontrainte exercée par ces organes de roulement sur les pistes de la platine.

Selon l'invention, ce dispositif de réglage 30 est extérieur audit système de guidage proprement dit, et solidarisable, de façon temporaire des patins 5 et 6, et comporte des moyens de mesure 31 de la pression exercée par les organes de roulement sur les pistes de la platine. Bien évidemment, le réglage réalisé par le dispositif 30 est effectué lorsque les vis de fixation 8 des patins 5 et 6 sur la base 2 sont desserrées.

Le dispositif de réglage 30 selon l'invention est, par exemple, constitué par deux colonnes 32 et 33, identiques, sensiblement parallèles, susceptibles d'être disposées de part et d'autre de la platine 1 sensiblement transversalement à la direction de guidage linéaire de la platine par rapport à la base 2, et par des moyens de réglage susceptibles de faire varier l'écartement des colonnes 32 et 33. Plus précisément, ces colonnes 32 et 33 sont susceptibles de venir en prise avec les patins 5 et 6. Pour cela, l'extrémité inférieure 35 de chaque colonne 32 et 33 est insérée dans un perçage 36 et 37 prévu dans chacun des patins 5 et 6.

Les moyens de réglage sont constitués par un mécanisme vis-écrou comprenant une tige 38, filetée à une estrémité 40 et terminée à son autre extrémité par une embase 41, et d'un écrou de réglage 39 vissé sur l'extrémité filetée 40. La tige 38 est introduite par son extrémité filetée 40 dans des trous de passages 43 et 44 prévus respectivement à l'extrémité supérieure 45 des colonnes 32 et 33. L'extrémité supérieure 45 de celles-ci est de section rectangulaire (figure 2) de façon que l'embase 41 d e la tige 38 vienne convenablement en butée contre l'une des faces de l'extrémité 45 de la colonne 32.

L'extrémité filetée 40 débouchante du trou de passage 44 de la colonne 33 reçoit de réglage 39. Ces moyens de réglage permettent ainsi de faire varier l'écartement, symbolisé par la cote "E" montrée figure 1, entre les deux colonnes 32 et 33. Les moyens de mesure 31, associés aux moyens de réglage, permettent d'ajuster la force exercée par les colonnes sur ledit élément central par l'intermédiaire des patins 5 et 6, lorsque celles-ci sont en prise avec lesdits patins. Avantageusement, chaque extrémité inférieure 35 des colonnes 32 et 33, qui s'insère dans les perçages 36 et 37 des patins 5 et 6 jusqu'à venir au contact de la base 2, présente une saillie d'appui latéral convexe 47 et 48. Les points de contact 49 entre la saillie convexe et la parti du perçage correspondant de chaque patin sont situés dans un plan médian et parallèle aux plans formés par les paires d'ensembles d'organes de roulement.

Dans un mode de réalisation particulier, les moyens de mesures 31 sont constitués par un dynamomètre du type à ressort 50, monté autour de l'extrémité filetée 40 de la tige 38, et disposé entre l'écrou de réglage 39, vissé sur la partie filetée 40, et la colonne 33. Celle-ci comporte alors sur son sommet un indicateur gradué 52 autour duquel est susceptible de se déplacer l'écrou 39, Par conséquent, la position de l'écrou de réglage 39 par rapport à l'indicateur gradué 52 correspond, en fonction du tarage du ressort 50, à un effort déterminé exercé par les colonnes 32 et 33 sur l'élément central ou platine 1 par l'intermédiaire des patins 5 et 6.

La mise en place du dispositif de réglage 30 dans le système de guidage s'effectue par l'introduction des parties d'extrémité inférieure 35 des colonnes 32 et 33 respectivement dans les perçages 36 et 37 des patins 5 et 6. Les parties d'extrémité 35 usinées avec soin reposent sur la face supérieure 54 de la base 2. Les vis de fixation 8 des patins 5 et 6 fixés à la base 2 sont desserrées. Ainsi, chaque patin peut se mouvoir, par rapport à la base 2, d'une amplitude certes trés limitée correspondant aux jeux fonctionnels existant entre le filetage des vis 8 et le taraudage des trous (non visibles en regard des figures) ménagés dans la base 2 et recevant les vis 8.

Le réglage de la précontrainte exercée par les ensembles 3, 3A, 4 et 4A d'organes de roulement contre les pistes de roulement 11 de la platine 1 est obtenu par le vissage de l'écrou 39, sur l'extrémité filetée 40 de la tige 38. Ce vissage entraîne alors une compression de ressort 50 et une diminution de la cote "E" d'écartement séparant les deux colonnes 32 et 33. La position de l'écrou 39 par rapport aux graduations ménagées sur l'indicateur gradué 52 lié à la colonne 33 correspond à une valeur représentative de la force exercée par les colonnes 32 et 33 sur la platine 1 par l'intermédiaire des patins 5 et 6, c'est-à-dire la précontrainte exercée par les ensembles d'organes de roulement 3, 3A, 4 et 4A contre les pistes de roulement 11 de la platine 1.

Comme le montre plus précisément la figure 3, la force exercée par la colonne 32 de la platine 1 s'applique aux points de contact 49 entre la saillie d'appui latéral convexe 47 et la paroi interne du perçage 36 ménagé dans le patin 5. Une force identique et symétrique est exercée par la colonne 33 sur la platine 1 par l'intermédiaire du patin 6. Du fait que les points de contact 49 des saillies convexes 47 et 48 des colonnes avec la paroi interne des perçages 36 et 37 sont situés dans un même plan médian et parallèle aux plans de chaque paire d'ensembles d'organes de roulement, la force exercée par chaque colonne se répartit identiquement sur chacun des ensembles d'organes de roulement d'un même patin, selon les deux directions $D_1$ et $D_2$ représentées en traits mixtes (figure 3) passant chacune par le centre des billes 10 se trouvant en contact avec les pistes de roulement 11. L'angle formé par les directions $D_1$ et $D_2$ correspond sensiblement à un angle droit.

Les patins 5 et 6 sont ainsi pressés l'un vers l'autre contre les pistes de roulement 11 de la platine 1, grâce à l'action des colonnes 32 et 33. Les billes 10 exercent une précontrainte déterminée, fonctions du tarage du ressort 50 et de la position de l'écrou 39 sur l'indicateur gradué 52, sur chaque piste de roulement 11. Lorsque le réglage de la précontrainte est terminé, les vis de fixation 8 des patins 5 et 6 sur la base 2 sont resserrées au couple convenable. Le dispositif peut alors être retiré. On obtient ainsi, grâce à l'adjonction temporaire du dispositif de réglage directement dans les patins, la valeur de la précontrainte souhaitée exercée par les organes de roulement sur la platine, et correspondant à l'optimisation du compromis précision de guidage - frottement.

**Revendications**

1 - Système de guidage linéaire à organes de roulement, du type comportant un élément central (1) et un élément périphérique (2) liés l'un à l'autre par au moins une paire d'ensembles (3 et 4) d'organes de roulement associés à des patins (5 et 6) fixés sur ledit élément périphérique (2) au moyen de vis (8), et disposés l'un en regard de l'autre de part et d'autre dudit élément central (1), ainsi qu'un dispositif (30) permettant de régler la pression exercée par lesdits organes de roulement sur ledit élément central (1) lorsque lesdites vis de fixation (8) sont desserrées, caractérisé en se que ledit dispositif de réglage (30) de la pression est extérieur audit système de guidage et solidarisable de façon temporaire desdits patins (5 et 6), et comporte des moyens de mesure (31) de la pression exercée par lesdits organes de roulement sur ledit élément central.

2 - Système de guidage selon la revendication 1, caractérisé en ce que ledit dispositif de réglage (30) est constitué par au moins deux colonnes (32 et 33) sensiblement parallèles, disposées de part et d'autre dudit élément central (1) sensiblement dans un plan perpendiculaire à la direction de guidage linéaire, et susceptibles de venir respectivement en prise avec lesdits patins (5 et 6), et par des moyens de réglage (38, 39) susceptibles de faire varier l'écartement desdites colonnes (32 et 33), lesdits moyens de mesure (31) étant associés auxdits moyens de réglage, et permettant de déterminer la force exercée par lesdites colonnes sur ledit élément central par l'intermédiaire des patins.

3 - Système de guidage selon la revendication 2, caractérisé en ce que lesdits moyens de réglage sont constitués par un mécanisme vis-écrou comprenant une tige (38) filetée, s'engageant dans des trous de passage (43 et 44) ménagés respectivement dans lesdites colonnes (32 et 33), en venant en butée par une extrémité (41) contre l'une (32) d'elles, la dite tige filetée débouchant de l'autre colonne (33) et recevant un écrou de réglage (39).

4 - Système de guidage selon l'une des revendications 1 à 3, caractérisé en ce que lesdits moyens de mesure (31) sont constitués par un dynamomètre du type à ressort (50) disposé entre ledit écrou du réglage (39) et ladite colonne (33) située en regard dudit écrou, celle-ci (33) étant équipée d'un indicateur gradué (52) avec lequel coopère ledit écrou de réglage (39).

5 - Système de guidage selon l'une des revendications 1 à 4, caractérisé en ce que dans chaque patin (5 et 6) portant un ensemble (3 et 4) d'organes de roulement est prévu un perçage (36 et 37) dans lequel est susceptible de venir s'insérer l'extrémité d'une colonne (32 et 33).

6 - Système de guidage selon l'une des revendications 1 à 5, dans lequel lesdits patins (5 et 6) sont du type à circulation de billes. caractérisé en ce que lesdits patins, disposés de part et d'autre dudit élément central, portent, chacun, deux ensembles (3, 3A et 4, 4A) d'organes de roulement superposés, ledit élément central étant ainsi guidé par deux paires (3,4 et 3A, 4A) d'ensembles d'organes de roulement.

7 - Système de guidage selon la revendication 6, caractérisé en ce que lesdites parties desdites colonnes (32 et 33) susceptibles d'être insérées dans lesdits perçages (36, 37) des patins (5 et 6) présentent une saillie d'appui latéral convexe (47 et 48).

8 - Système de guidage selon les revendications 6 et 7, caractérisé en ce que les points de contact (49) entre ladite saillie d'appui latéral convexe (47 et 48) et la paroi du perçage (36 et 37) correspondant de chaque patin (5, 6) sont situés dans un plan médian et parallèle aux plans formés par les paires d'ensembles d'organes de roulement.

9 - Dispositif de réglage (30) destiné à un système de guidage linéaire à organes de roulement comportant un élément central (1) et un élément périphérique (2) liés l'un à l'autre par au moins une paire d'ensembles (3 et 4) d'organes de roulement associés à des patins (5 et 6) fixés sur ledit élément périphérique (2) au moyen de vis (8), et disposés l'un en regard de l'autre de part et d'autre dudit élément central (1), ledit dispositif de réglage (30) permettant de régler la pression exercée par lesdits organes de roulement sur ledit élément central lorsque lesdites vis de fixation desdits patins sont desserrées, caractérisé en ce qu'il est susceptible d'être solidarisé de façon temporaire audit système et en ce qu'il comporte des moyens de mesure (31) de la pression exercée par lesdits organes de roulement sur ledit élément central (1).

10 - Dispositif de réglage selon la revendication 9, caractérisé en se qu'il est constitué par au moins deux colonnes (32 et 33) sensiblement parallèles susceptibles de venir respectivement en prise avec lesdits patins (5 et 6), et par des moyens de réglage (38, 39) susceptibles de faire varier l'écartement desdites colonnes (32 et 33), lesdits moyens de mesure (31) étant associés auxdits moyens de réglage, et permettent de déterminer la force exercée par lesdites colonnes sur ledit élément central (1) par l'intermédiaire des patins (5 et 6).

11 - Dispositif de réglage selon la revendication 10,
caractérisé en ce que lesdits moyens de réglage sont constitués par un mécanisme vis-écrou comprenant une tige (38) filetée, susceptible de s'engager dans des trous de passage (43 et 44) ménagés respectivement dans lesdites colonnes (32 et 33), en venant en butée par une extrémité contre l'une (32) d'elles, ladite tige filetée débouchant de l'autre colonne (33) et recevant un écrou de réglage (39).

12 - Dispositif selon l'une des revendications 9 à 11,
caractérisé en ce que lesdits moyens de mesure (31) sont constitués par un dynamomètre du type à ressort (50) disposé entre ledit écrou de réglage (39) et ladite colonne (33) située en regard dudit écrou celle-ci étant équipée d'un indicateur gradué (52) avec lequel coopère ledit écrou de réglage (39).

13- Dispositif selon l'une des revendications 10, 11 ou 12,
caractérisé en ce qu'une partie extrême desdites colonnes (32 et 33) présente une saillie d'appui latéral convexe (47 et 48).

**Claims**

1. Linear guiding system incorporating rolling members, of the type comprising a central element (1) and a peripheral element (2) connected to each other by at least one pair of rolling member assemblies (3 and 4) associated with blocks (5 and 6) fixed on said peripheral element (2) by means of screws (8), and disposed opposite one another on either side of said central element (1) as well as a device (30) for adjusting the pressure exerted by said rolling members on said central element (1) when said fixing screws (8) are loosened, characterized in that said pressure adjusting device (30) is outside said guiding system and is adapted to be temporarily fast with said blocks (5 and 6), and comprises means (31) for measuring he pressure exerted by said rolling members on said central element.

2. Guiding system according to claim 1, characterized in that said adjusting device (30) is constituted by at least two substantially parallel columns (32 and 33), disposed on either side of said central element (1) substantially in a plane perpendicular to the direction of linear guiding, and capable of coming respectively into engagement with said blocks (5 and 6), and by adjusting means (38, 39) capable of varying the spaced apart relationship of said columns (32 and 33), said measuring means (31) being associated with said adjusting means, and making it possible to determine the force exerted by said columns on said central element via the blocks.

3. Guiding system according to claim 2, characterized in that said adjusting means are constituted by a screw-nut mechanism comprising a threaded rod (38), engaging in holes (43 and 44) for passage made respectively in said columns (32 and 33), by coming into abutment by one end (41) against one (32) of them, said threaded rod opening out from the other column (33) and receiving an adjusting nut (39).

4. Guiding system according to one of claims 1 to 3, characterized in that said measuring means (31) are constituted by a dynamometer of the type with spring (50) disposed between said adjusting nut (39) and said column (33) located opposite said nut, the latter (33) being provided with a graduated indicator (52) with which said adjusting nut (39) cooperates.

5. Guiding system according to one of claims 1 to 4, characterized in that in each block (5 and 6) bearing a rolling member assembly (3 and 4), there is provided a bore (36 and 37) in which the end of a column (32 and 33) is capable of being inserted.

6. Guiding system according to one of claims 1 to 5, in which said blocks (5 and 6) are of the type with circulation of balls, characterized in that said blocks, disposed on either side of said central element, each bear two superposed rolling member assemblies (3, 3A and 4, 4A), said central element thus being guided by two pairs (3, 4 and 3A, 4A) of rolling member assemblies.

7. Guiding system according to claim 6, characterized in that those parts of said columns (32 and 33) capable of being inserted in said bores (36, 37) in the blocks (5 and 6) present a convex lateral support projection (47 and 48).

8. Guiding system according to claims 6 and 7, characterized the points of contact (49) between said convex lateral support projection (47 and 48) and the wall of the corresponding bore (36 and 37) in each block (5, 6) are located in a median plane parallel to the planes formed by the pairs of rolling member assemblies.

9. Adjusting device (30) intended for a linear guiding system incorporating rolling members comprising a central element (1) and a peripheral element (2) connected to each other by at least one pair of rolling member assemblies (3 and 4) associated with blocks (5 and 6) fixed on said peripheral element (2) by means of screws (8), and disposed opposite each other on either side of said central element (1) said adjusting device (30) making it possible to adjust the pressure exerted by said rolling members on said central element when said screws for fixing said blocks are loosened, characterized in that it is capable of being rendered temporarily fast with said system and in that it comprises means (31) for measuring the pressure exerted by said rolling members on said central element (1).

10. Adjusting device according to claim 9, characterized in that it is constituted by at least two substantially parallel columns (32 and 33) capable of coming respectively into engagement with said blocks (5 and 6), and by adjusting means (38, 39) capable of varying the spaced apart relationship of said columns (32 and 33), said measuring means (31) being associated with said adjusting means, and make it possible to determine the force exerted by said columns on said central element (1) via the blocks (5 and 6).

11. Adjusting device according to claim 10, characterized in that said adjusting means are constituted by a screw-nut mechanism comprising a threaded rod (38) capable of engaging in holes (43 and 44) for passage made respectively in said columns (32 and 33), by coming into abutment by one end against one (32) of them, said threaded rod opening from the other column (33) and receiving an adjusting nut (39).

12. Adjusting device according to one of claims 9 to 11, characterized in that said measuring means (31) are constituted by a dynamometer of the type with springs (50) disposed between said adjusting nut (39) and said column (33) located opposite said nut, said column being equipped with a graduated indicator (52) with which said adjusting nut (39) cooperates.

13. Adjusting device according to one of claims 10, 11 or 12, characterized in that an end part of said columns (32 and 33) presents a convex lateral support projection (47 and 48).

**Patentansprüche**

1. Mit Rollelementen versehenes lineares Führungssystem mit einem zentralen Element (1) und einem peripheren Element (2), die miteinander über mindestens ein Paar von Rollelementanordnungen (3 und 4) verbunden sind, welche mittels Schrauben (8) am peripheren Element (2) befestigten Gleitkufen (5 und 6) zugeordnet sind und die jeweils beiderseits des zentralen Elements (1) angeordnet sind, sowie mit einer Einrichtung (30), die die Einstellung des von den Rollelementen auf das zentrale Element (1) ausgeübten Drucks erlaubt, wenn die Befestigungsschrauben (8) gelöst sind, dadurch gekennzeichnet, daß die Einstelleinrichtung (30) für den Druck sich außerhalb des Führungssystems befindet und zeitweise mit den Gleitkufen (5 und 6) verbunden werden kann, und daß sie Mittel (31) zum Messen des von den Rollelementen auf das zentrale Element ausgeübten Drucks aufweist.

2. Führungssystem nach Anspruch 1, dadurch gekennzeichnet, daß die Einstelleinrichtung (30) aus mindestens zwei im wesentlichen parallelen, beiderseits des zentralen Elements (1) in einer im wesentlichen zur linearen Führungsrichtung senkrechten Ebene angeordneten Säulen (32 und 33), welche jeweils mit den Gleitkufen (5 bzw. 6) in Eingriff kommen, und aus Einstellmitteln (38, 39) zur Veränderung des Abstands zwischen den Säulen (32 und 33) besteht, wobei die Mittel (31) zum Messen den Einstellmitteln (38, 39) zugeordnet sind und die Bestimmung der von den Säulen auf das zentrale Element über die Gleitkufen ausgeübten Kraft erlauben.

3. Führungssystem nach Anspruch 2, dadurch gekennzeichnet, daß die Einstellmittel aus einem Schraube-Mutter-Mechanismus mit einem Gewindebolzen (38) bestehen, der in jeweils in den Säulen (32 und 33) angebrachte Durchgangslöcher (43 und 44) eingreift, wobei er sich mit einem Ende (41) gegen eine Säule (32) abstützt und aus der anderen Säule (33) austritt, wobei er dort mit einer Einstellmutter (39) versehen ist.

4. Führungssystem nach einem der Ansprüche 1 bis 3, dadurch gekennzeichnet, daß die Mittel zum Messen (31) aus einem Federkraftmesser (50) bestehen, der zwischen der Einstellmutter (39) und der der Mutter am nächsten stehenden Säule (33) angeordnet ist, wobei die Säule (33) mit einer Skala (52) versehen ist, mit der die Einstellmutter (39) zusammenwirkt.

5. Führungssystem nach einem der Ansprüche 1 bis 4, dadurch gekennzeichnet, daß jede eine Rollelementanordnung (3 und 4) tragende Gleitkufe (5 und 6) mit einer Bohrung (36 und 37) versehen ist, in die das Ende einer Säule (32 und 33) eingeführt werden kann.

6. Führungssystem nach einem der Ansprüche 1 bis 5, wobei die Gleitkufen Kugelumlaufgleitkufen sind, dadurch gekennzeichnet, daß die beiderseits des zentralen Elementes angeordneten Gleitkufen je zwei Aufbauten (3, 3A und 4, 4A) von übereinander angeordenten Rollelementen tragen, wobei das zentrale Element somit durch die beiden Paare (3, 4 und 3A, 4A) von Rollelementanordnung geführt wird.

7. Führungssystem nach Anspruch 6, dadurch gekennzeichnet, daß die in die Bohrungen (36, 37) der Gleitkufen (5 und 6) einschiebbaren Teile der Säulen (32 und 33) einen seitlichen, konvexen Abstützvorsprung (47 und 48) aufweisen.

8. Führungssystem nach den Ansprüchen 6 und 7, dadurch gekennzeichnet, daß die Kontaktstellen (49) zwischen dem seitlichen, konvexen Abstützvorsprung (47 und 48) und der Wand der entsprechenden Bohrung (36 und 37) jeder Gleitkufe (5, 6) sich in einer mittleren Ebene parallel zu den von den Paaren der Rollelementanordnungen gebildeten Ebenen befinden.

9. Einstelleinrichtung (30) für ein lineares Führungssystem mit einem zentralen Element (1) und einem peripheren Element (2) die miteinander über mindestens ein Paar von Rollelementanordnungen (3 und 4) verbunden sind, welche mittels Schrauben (8) am peripheren Element (2) befestigten Gleitkufen (5 und 6) zugeordnet sind und die jeweils beiderseits des zentralen Elementes (1) angeordnet sind, sowie mit einer Einrichtung (30), die die Einstellung des von den Rollelementen auf das zentrale Element (1) ausgeübten Drucks erlaubt, wenn die Befestigungsschrauben (8) gelöst sind, dadurch gekennzeichnet, daß sie zeitweise mit dem System verbunden werden kann und daß sie Mittel (31) zum Messen des von den Rollelementen auf das zentrale Element (1) ausgeübten Drucks aufweist.

10. Einstelleinrichtung nach Anspruch 9, dadurch gekennzeichnet, daß sie aus mindestens zwei im wesentlichen parallelen Säulen (32 und 33), jeweils mit den Gleitkufen (5 bzw. 6) in Eingriff kommen, und aus Einstellmitteln (38, 39) zur Veränderung des Abstands zwischen den Säulen (32 und 33) besteht, wobei die Mittel (31) zum Messen den Einstellmitteln (38, 39) zugeordnet sind und die Bestimmung der von den Säulen auf das zentrale Element (1) über die Gleitkufen (5 und 6) ausgeübten Kraft erlauben.

11. Einstelleinrichtung nach Anspruch 10, dadurch gekennzeichnet, daß die Einstellmittel aus einem Schraube-Mutter-Mechanismus mit einem Gewindebolzen (38) bestehen, der in jeweils in den Säulen (32 und 33) angebrachte Durchgangslöcher (43 und 44) eingreift, wobei er sich mit einem Ende (41) gegen eine Säule (32) abstützt und aus der anderen Säule (33) austritt, wobei er dort mit einer Einstellmutter (39) versehen ist.

12. Einstelleinrichtung nach einem der Ansprüche 9 bis 11, dadurch gekennzeichnet, daß die Mittel zum Messen (31) aus einem Federkraftmesser (50) bestehen, der zwischen der Einstellmutter (39) und der der Mutter am nächsten stehenden Säule (33) angeordnet ist, wobei die Säule (33) mit einer Skala (52) versehen ist, mit der die Einstellmutter (39) zusammenwirkt.

13. Einstelleinrichtung nach einem der Ansprüche 10, 11 oder 12, dadurch gekennzeichnet, daß ein Teil am Ende der Säulen (32 und 33) einen seitlichen, konvexen Abstützvorsprung (47 und 48) aufweist.

FIG.1

FIG.2

FIG.3

FIG.4          FIG.5